# EUROPEAN PATENT APPLICATION

(11) **EP 1 259 055 A1**
(43) Date of publication of application: **20.11.2002**
(21) Application number: 01273485.1
(22) Date of filing: 25.01.2001
(51) Int. Cl.: H04M 3/42, H04M 11/00, H04Q 7/20, G06F 13/00

(54) **SERVER, TERMINAL AND COMMUNICATION METHOD USED IN SYSTEM FOR COMMUNICATION IN PREDETERMINED LANGUAGE**

(71) Applicant: MITSUBISHI DENKI KABUSHIKI KAISHA, Tokyo 100-8310 (JP)
(72) Inventor: FUKUYAMA, Shinjiro, c/o MITSUBISHI DENKI K.K., Tokyo 100-8310 (JP)
(74) Representative: Bohnenberger, Johannes, Dr.
(86) International application number: JP0100499
(87) International publication number: WO02060165

(57) **Abstract**

A system communicating in a language requested by the user includes a mobile phone (100), a fixed phone (500) and a server (200). The mobile phone (100) includes a reading unit (126) reading language information when an USIM card (128) is attached, a communication unit (122) sending the language information and a connecting destination to the server (200), and a voice output unit (138) outputting information received from the server (200). The server (200) includes a circuit storing the language information received from the mobile phone (100), a circuit sending the stored language information to the fixed phone (500) of the connecting destination when the connecting destination is received from the mobile phone (100), and a circuit responsive to reception of information sent in response to the language information from the fixed phone (500) of the connecting destination to send the received information to the mobile phone (100).

## Description

### Technical Field

The present invention relates to a system communicating using a plurality of languages, and more particularly to a technique for communicating using a language required by the user of a mobile phone.

### Background Art

In the Internet or the like, information is often provided in a language which the user cannot understand. In order to avoid this, the user finds out a contents server which provides information in the language which the user can understand, and requests information from that server. Furthermore, in a mobile communication system, a method of establishing a communication is provided in which the user of a mobile phone receives language information from a communication network in which the mobile phone resides, and selects one language from the received language information. Such a communication method includes the following.

Japanese Patent Laying-Open No. 11-88530 discloses a communication method in a communication network communicating in a language selected from a plurality of languages, including the following steps: broadcasting information indicative of a plurality of languages available in the communication network by a specific device in the communication network; receiving the broadcast information by a communication terminal; and selecting one of the plurality of languages included in the information for communication by the communication terminal.

According to this communication method, a switching device in the communication network broadcasts the information indicative of the plurality of languages available in the communication network, within the communication network. In a mobile communication system, a radio base station broadcasts identification information of that base station, identification information of a called zone or the like. The radio base station broadcasts information indicative of a plurality of languages usable in this communication network along with such broadcast information. The user of a communication terminal selects a language that he/she wishes to use from the plurality of languages included in the broadcast information. Therefore, the communication can be established using the selected language.

The method disclosed in the above publication, however, can be realized only when information indicative of a plurality of languages is broadcasted from a specific equipment in a communication network.

The above publication also discloses a communication method of registering information representative of a language used for each mobile phone into a specific equipment in a communication network when a new contract of a mobile phone is made.

In this communication method, however, a communication network using a language requested by the user cannot be realized when the users of the mobile phone temporarily change over and a desired language is changed.

Therefore, it is an object of the present invention to provide a server, a terminal and a communication method for use in a system communicating in a language requested by the user independent of language information sent from a communication network.

It is another object of the present invention to provide a server, a terminal and a communication method for use in a system communicating in a language requested by the user without changing registration at the time of a new contract, even when the users change over.

It is a further object of the present invention to provide a server, a terminal and a communication method allowing for an easy change of communication in a language requested by the user even when the users change over.

It is other object of the present invention to provide a server, a terminal and a communication method allowing for communication of voice information in a language requested by the user.

It is yet another object of the present invention to provide a server, a terminal and a communication method allowing for communication of character information in a language requested by the user.

### Disclosure of the Invention

A server in accordance with the present invention is used in a communication system including a plurality of terminals and a server communicating with the terminals. Each of the terminals includes means for reading language information representative of a language used by the user of the terminal from a recording medium removable from the terminal, means for sending to the server the language information and a connecting destination input by the user of the terminal, and means for outputting information received from the server. The server includes communication means for communicating with the terminal, storage means for storing information, and control means connected to the communication means and the storage means for controlling the communication means and the storage means. The control means includes means, responsive to reception of the language information via the communication means from the terminal, for controlling the storage means such that the received language information is stored, means, responsive to reception of the connecting destination via the communication means from the terminal, for controlling the communication means such that the language information stored in the storage means is sent to the terminal of the connecting destination, and means, responsive to reception of information sent from the terminal of the connecting destination in response to the language information via the communication means, for controlling the communication means such that the information received from the connecting destination is sent to the terminal.

The terminal reads the language information representative of the language used by the user of the terminal from the recording medium removable from the terminal and sends the same to the server. When the server receives the language information from the terminal via the communication means, it stores the received language information into the storage means. When the server receives the connecting destination from the terminal via the communication means, it sends the language information stored in the storage means to the terminal of the connecting destination. When the server receives the information sent from the terminal of the connecting destination in response to the language information via the communication means, it sends the information received from the connecting destination, to the terminal. Therefore, for example when the terminal detects that the recording medium is attached, it sends the language information to the server. The server can send the received language information to the terminal of the connecting destination and receive voice information and language information which respond to the language recorded in the recording medium to send it to the terminal.

More preferably, the means for controlling such that the language information is sent to the terminal of the connecting destination includes means for controlling the communication means such that the connecting destination receives the language information before a communication line between the server and the terminal of the connecting destination opens.

Therefore, in the communication between the server and the terminal of the connecting destination, the server can send the language information to the terminal of the connecting destination before the communication line opens. The terminal of the connecting destination can display the language information before the communication line opens. The user of the terminal of the connecting destination can see the displayed language information to determine whether to open the communication line.

More preferably, the means for controlling such that the language information is sent to the terminal of the connecting destination includes means for controlling the communication means such that the connecting destination receives the language information after the communication line between the server and the terminal of the connecting destination opens.

Therefore, in the communication between the server and the terminal of the connecting destination, the language information can be sent using a conventional communication procedure. The server can send the language information to the terminal of the connecting destination without providing a new standard for communication.

More preferably, the control means further includes means for connecting the server to the connecting destination through a communication channel and a control channel, and the means for controlling such that the language information is sent to the terminal of the connecting destination includes means for controlling the communication means such that the connecting destination receives the language information through the control channel.

Therefore, in the communication between the server and the terminal of the connecting destination, the server can send the language information to the terminal of the connecting destination using the control channel provided separately from the communication channel.

A terminal according to the present invention is used in a communication system including a terminal and a server communicating with the terminal. The server includes means connected to a terminal of a connecting destination designated by the terminal for storing language information received from the terminal, means, responsive to reception of the connecting destination from the terminal, for sending the language information to the connecting destination, means for receiving information sent in response to the language information, and means for sending information received from the terminal of the connecting destination to the terminal. The terminal includes communication means for communicating with the server, reading means for reading information from a recording medium removable from the terminal, input means for allowing the user of the terminal to input the connecting destination, output means for outputting information received from the server, and control means connected to the communication means, the reading means, the input means and the output means for controlling the terminal. The language information representative of a language used by the user of the terminal is recorded in the recording medium. The control means includes means for controlling the communication means such that the language information read by the reading means is sent to the server based on a predetermined condition, means, responsive to input of the connecting destination using the input means, for controlling the communication means such that the connecting destination is sent to the server, and means for controlling the output means such that information received from the server through the communication means is output.

The terminal reads the language information representative of a language used by the user of the terminal from the recording medium. The terminal sends the language information read by the reading means to the server based on a predetermined condition. When the connecting destination is input using the input means, the terminal sends the connecting destination to the server. The terminal outputs the information received from the server through the communication means to the output means. Therefore, for example when the terminal detects that the recording means is attached, it sends the language information to the server. The terminal can receive from the server and output voice information and language information which responds to the language recorded in the recording medium.

More preferably, the predetermined condition is such that the reading means detects that the recording medium is attached.

Therefore, when the recording medium is attached to the terminal, the reading means reads the language information. When the users of the mobile phone change over and another recording medium is attached to the mobile phone, another language information recorded in the attached recording medium is sent to the server.

More preferably, the recording medium is a recording medium in which language information is stored in a predetermined data format.

The language information is recorded in the recording medium, for example, in conformity with USIM (Universal Subscriber Identity Module) of a standard for the next generation mobile phone. When the recording medium is attached to the terminal outside the user's home country, the language information indicative of the language used by the user in his/her home country is read and the communication using that language can be realized, because USIM is an international standard.

A communication method in accordance with the present invention is for a server for use in a communication system including a plurality of terminals and a server communicating with the terminals. Each terminal reads language information representative of a language used by the user of the terminal from a recording medium removable from the terminal, sends the language information and a connecting destination input by the user of the terminal to the server, and outputs information received from the server. The communication method includes the steps of: in response to the language information being received from the terminal, storing the received language information; in response to the connecting destination being received from the terminal through communication means, sending the language information stored in the step of storing the language information to a terminal of the connecting destination; and in response to information sent in response to the language information being received from the terminal of the connecting destination, sending the information received from the connecting destination to the terminal.

The terminal reads the language information representative of a language used by the user of the terminal from the recording medium removable from the terminal and sends the same to the server. When the server receives the language information from the terminal, it stores the received language information. When the server receives the connecting destination from the terminal, it sends the stored language information to the terminal of the connecting destination. When the server receives the information sent from the terminal of the connecting destination in response to the language information, it sends the information received from the connecting destination to the terminal. Therefore, the terminal sends the language information to the server for example when it detects that the recording medium is attached. The server can send the received language information to the terminal of the connecting destination and receive voice information and language information which respond to the language recorded in the recording medium to send it to the terminal.

### Brief Description of the Drawings

Fig. 1 is an overall diagram of a communication system in accordance with the present invention.

Fig. 2 is an external view of a mobile phone for use in the communication system in accordance with the present invention.

Fig. 3 is a control block diagram of the mobile phone shown in Fig. 2.

Fig. 4 is an external view of a computer system implementing a server for use in the communication system in accordance with the present invention.

Fig. 5 is a control block diagram of the mobile phone shown in Fig. 4.

Fig. 6 is a diagram showing a data structure of USIM.

Fig. 7 is a diagram representing a structure of language information sent from the mobile phone to the server.

Fig. 8 is a diagram representing a database stored in the server.

Fig. 9 is a flow chart illustrating the processes in the mobile phone, a base station and the server.

Fig. 10 is a first flow chart illustrating the processes in the server.

Fig. 11 is a first flow chart illustrating the processes in a fixed phone.

Fig. 12 is a second flow chart illustrating the processes in the server.

Fig. 13 is a third flow chart illustrating the processes in the server.

Fig. 14 is a flow chart illustrating the processes in the server and a contents server.

### Best Modes for Carrying Out the Invention

In the following, embodiments of the present invention will be described with reference to the figures. In the following description, the same components will be denoted with the same signs. Th names and functions thereof are also the same. Therefore, description thereof in detail will not be repeated.

### First Embodiment

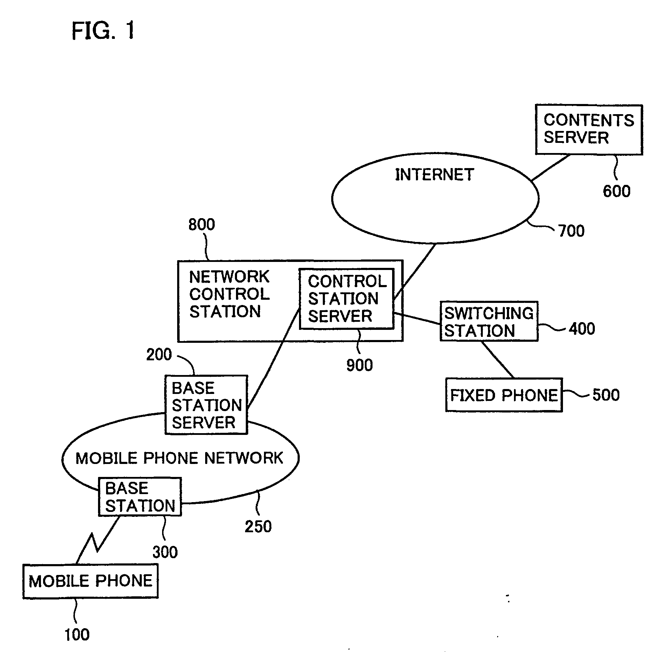

Referring to Fig. 1, a communication system in accordance with the present embodiment is applied to a mobile communication between a mobile phone 100 and a fixed phone 500 or a contents server 600. As shown in Fig. 1, the communication system includes mobile phone 100, a base station carrying out a processing such as a communication connection in radio communication with mobile phone 100 and the like, a base station server 200 (simply referred to as server 200 hereinafter) connected with base station 300 over a mobile phone network 250 and run by a communication company of the mobile phone or the like, a control station server 900 connected with server 200, of a network control station 800 for communication between mobile phone 100 and a network other than mobile phone network 250, a switching base 400 connected with control station server 900 for communication between mobile phone 100 and fixed phone 500, and fixed phone 500 connected with switching station 400. Control station server 900 is connected with contents server 600 via the Internet 700. Contents server 600 stores character information which is sent according to a request from mobile phone 100. Fixed phone 500 includes a display unit displaying data based on information received from server 200 via control station server 900, and a message reproducing unit automatically reproducing a response to mobile phone 100 via control station server 900, server 200 and base station 300. This message reproducing unit can switch a plurality of languages and output voice preliminarily recorded.

It is noted that the connection between mobile phone network 250, network control station 800, the Internet 700 and switching station 400 may take a variety of forms and may not be limited to the forms as mentioned previously. For example, server 200 may be included in base station 300, or the functions of control station server 900 and server 200 may be integrated into network control station 800.

The communication system in accordance with the present invention allows for a conversation between mobile phone 100 and fixed phone 500 using a language which the user of mobile phone 100 wishes to use, and reception of contents described in the language which the user of mobile phone 100 wishes to use, from contents server 600.

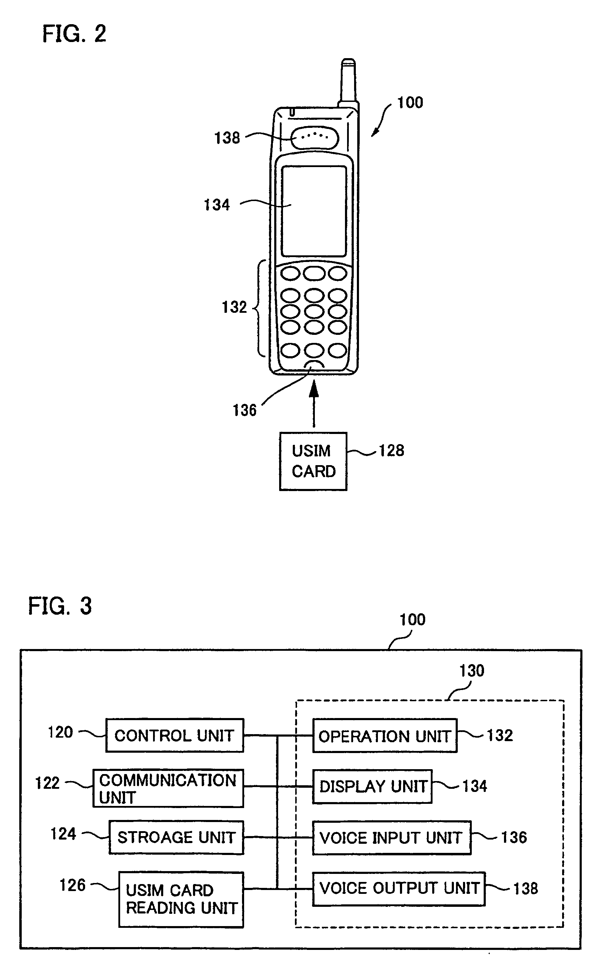

Referring to Fig. 2, mobile phone 100 in accordance with the present embodiment includes an operation unit 132 including a ten-key pad or the like for inputting the number of fixed phone 500 as a called party, URL (Uniform Resource Locators) of contents server 600 or the like, a display unit 134 such as an LCD (Liquid Crystal Display) or the like, a voice input unit 136 including a microphone, and a voice output unit 138 including a speaker. This mobile phone 100 has a slot for inserting an USIM card 128 as described later.

Fig. 3 illustrates a control block of mobile phone 100. As shown in Fig. 3, mobile phone 100 includes a control unit 120 controlling the entire mobile phone 100, a communication unit 122 for communicating with fixed phone 500 and contents server 600, a storage unit 124 storing a program executed in control unit 120, intermediate data of that program and data received from server 200 through communication unit 122, and an input/output unit 130. This mobile phone 100 further includes an USIM card reading unit 126 reading USIM card 128.

Input/output unit 130 includes an operation unit 132 for the user of mobile phone 100 to input URL of contents server 600 and fixed phone 500 or input a variety of settings, a display unit 134 displaying the contents input by the ten-key pad or the information received from server 200, a voice input unit 136 converting voice input to the microphone into a digital signal which is sent to the control unit 120, and a voice output unit 138 receiving and converting the digital signal from control unit 120 to an analog signal to output voice from the speaker.

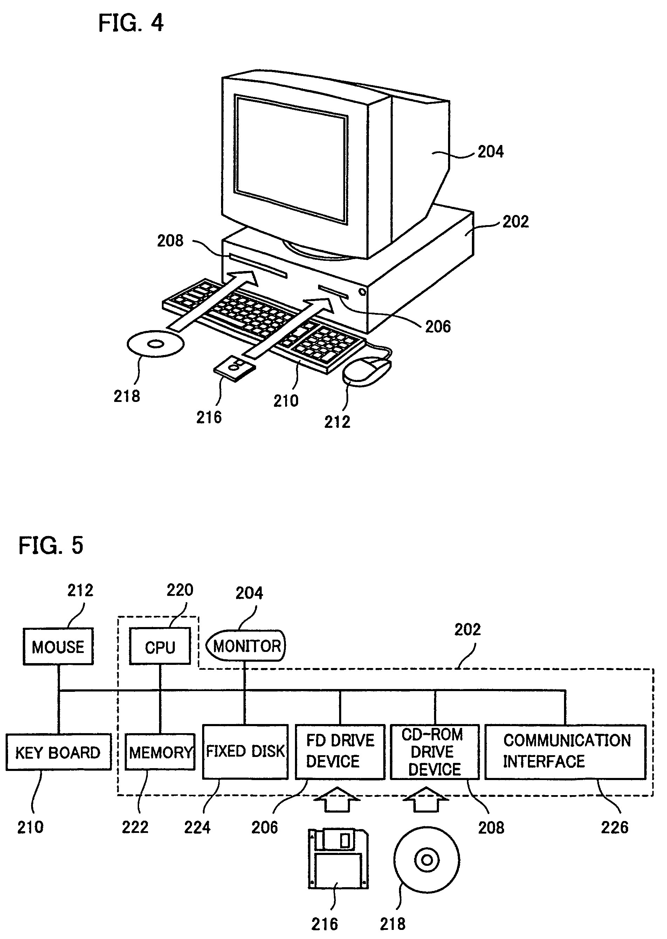

Fig. 4 shows an external view of an exemplary computer system of server 200. Referring to Fig. 4, this computer system includes a computer 202 having a FD (Flexible Disk) drive device 206 and a CR-ROM (Compact Disc-Read Only Memory) drive device 208, a monitor 204, a keyboard 210, and a mouse 212.

Fig. 5 shows a block diagram of the configuration of this computer system. As shown in Fig. 5, computer 202 includes, in addition to FD drive device 206 and CD-ROM drive device 208 described above, a CPU (Central Processing Unit) 220, memory 222 and a fixed disk 224, connected to each other with a bus. A FD 216 is attached to FD drive device 206. A CD-ROM 218 is attached to CD-ROM drive device 208.

The method of communicating in a prescribed language in the communication system is implemented by computer hardware and software executed by CPU 220. Such software is generally stored in a recording medium including FD 216 and CD-ROM 218 for distribution, and is read from the recording medium by FD drive device 206 or CD-ROM drive device 208 for temporary storage in fixed disk 224. It is further read out from fixed disk 224 to memory 222 and executed by CPU 220. The hardware of the computer shown in Figs. 4 and 5 as such is well known. Therefore, the most essential part of the present invention is software recorded in a recording medium such as FD 216, CD-ROM 218, fixed disk 224 or the like.

It is noted that an operation of the computer shown in Figs. 4 and 5 as such is well known and therefore the detailed description thereof will not be repeated.

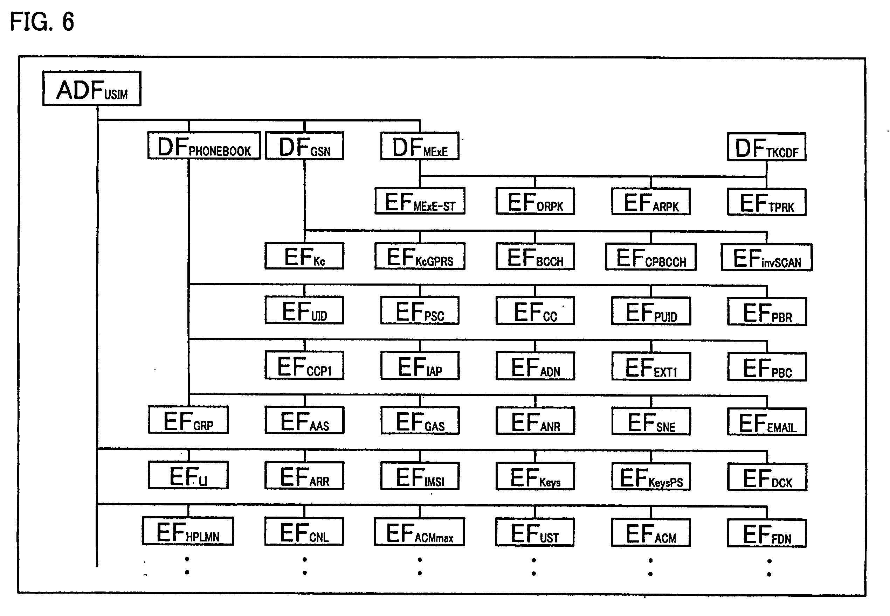

Referring to Fig. 6, data recorded in USIM card 128 will be described. The data stored in USIM card 128 is defined by 3GPP (3rd Generation Partnership Project) which studies the specification of W-CDMA (Wideband Code Division Multiple Access) system that is one of world standards for the next generation mobile phones. Fig. 6 shows a part of data defined by 3GPP. As shown in Fig. 6, the data recorded in USIM card 128 has a hierarchical structure. Among others information about language is stored as LI (Language Indication). A language name, for example, 'Japanese', 'English', 'Chinese' and the like is stored as LI.

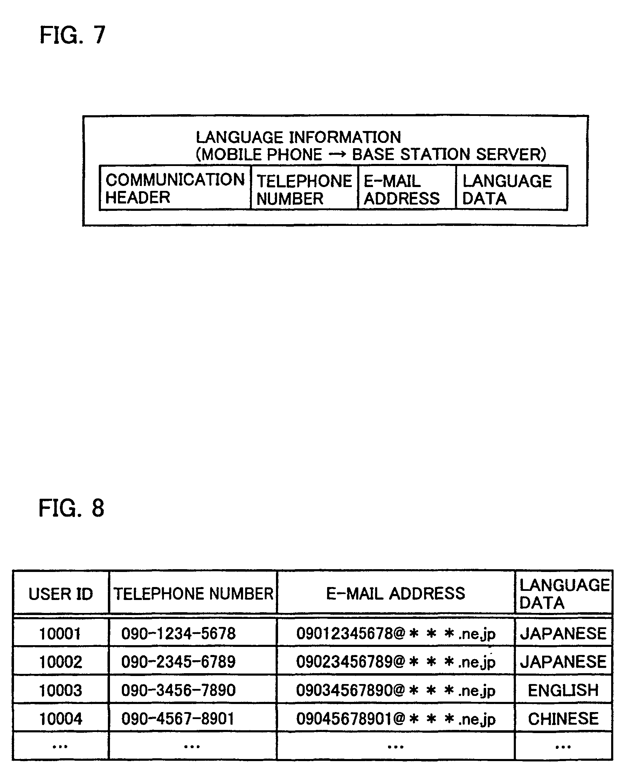

Referring to Fig. 7, the language information sent from mobile phone 100 to server 200 via phone network 250 and base station 300 will be described. As shown in Fig. 7, the language information includes a communication header, a telephone number, an E-mail address and language data. The communication header enables this information to be identified as language information. The language data enables the language used by the user of this USIM card to be specified. The telephone number is that of mobile phone 100, and the E-mail address is a mail address set for each mobile phone 100. Contents server 600 can send contents to a prescribed mobile phone 100 with this E-mail address.

Referring to Fig. 8, a database stored in fixed disk 224 of server 200 will be described. As shown in Fig. 8, the database stores the language data and the E-mail address included in the language information received by server 200 from mobile phone 100 via mobile phone network 250 and base station 300, in association with the telephone number of mobile phone 100. Furthermore, the data is provided with a user ID (Identification) which allows the data of the database stored in fixed disk 224 to be specified uniquely. The language name such as 'Japanese', 'English', 'Chinese' or the like stored as LI of USIM card is stored as language data of the data base shown in Fig. 8.

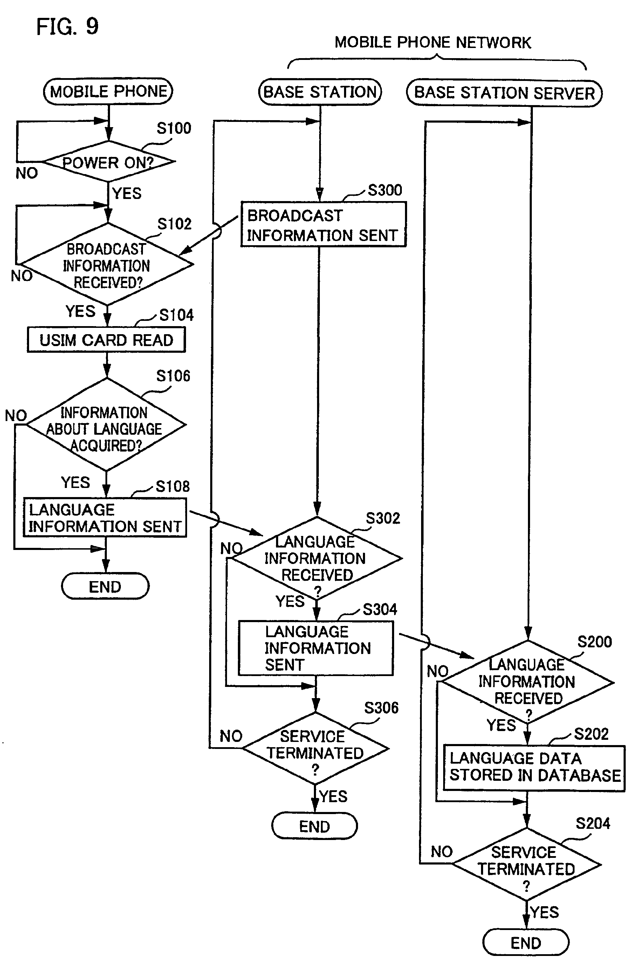

Referring to a flow chart shown in Fig. 9, description will be made to the process of registering the language data, in mobile phone 100, base station 300 included in mobile phone network 250 and server 200 of the communication system in accordance with the present embodiment. It is noted that the process in base station 300 as described below is carried out specifically in the control unit of base station 300.

At step (abbreviated as S hereinafter) 100, control unit 120 of mobile phone 100 determines whether mobile phone 100 is powered. If the power is applied (YES at S100), the process will go on to S102. On the other hand, if the power is not applied (NO at S100), the process will return to S100, waiting for the power to be applied.

At S102, control unit 120 determines whether broadcast information is received from base station 300. The broadcast information includes identification information of base station 300 or identification information of a called zone. If the broadcast information is received from base station 300 (YES at S102), then the process will go on to S104. On the other hand, if the broadcast information is not received from base station 300 (NO at S102), then the process will return to S102, waiting for the broadcast information to be received.

At S104, control unit 120 reads data recorded in USIM card at USIM card reading unit 126.

At S106, control unit 120 determines whether information about language (LI) is acquired from the data read from the USIM card. This determination is made depending on whether data is recorded in a location where information about language (LI) is stored within the USIM card. If the information about language (LI) is acquired (YES at S106) then the process will go on to S108. On the other hand, the information about language (LI) fails to be acquired (NO at S106) then the process in mobile phone 100 will end without carrying out the process at S108.

At S108, control unit 120 generates and sends the language information shown in Fig. 7 to base station 300. Thereafter, the process in mobile phone 100 will end.

At S300, base station 300 sends the broadcast information to mobile phone 100. At S302, base station 300 determines whether it receives the language information from mobile phone 100. If the language information is received form mobile phone 100 (YES at S302) the process will go on to S304. On the other hand, if the language information is not received from mobile phone 100 (NO at S302) then the process will go on to S306.

At S304, base station 300 sends to server 200 the language information received from mobile phone 100. At S306, base station 300 determines whether it terminates its own service. This determination is made based on a predetermined operation schedule of base station 300 and the present date and time. If base station 300 terminates the service (YES at S306) then the process will end. On the other hand, if base station 300 does not terminate the service (NO at S306) then the process will return to S300.

At S200, CPU 220 of server 200 determines whether it receives the language information from base station 300. If the language information is received from base station 300 (YES at S200) then the process will go on to S202. On the other hand, if the language information is not received form base station 300 (NO at S200) then the process will go on to S204.

At S202, CPU 220 stores the database shown in Fig. 8 into fixed disk 224 based on the language information received from base station 300.

At S204, CPU 220 determines whether it terminates its own service. This determination is made based on a predetermined operation schedule of server 200 and the present date and time. If server 200 terminates the service (YES at S204) then the process will end. On the other hand, if server 200 does not terminate the service (NO at S204) then the process will return to S200.

It is noted that although in the forgoing the processes from S300 to S306 are carried out at base station 300 and the processes from S200 to S204 are carried out at server 200, all these processes may be carried out at server 200. Alternatively, only a process concerning a communication connection may be carried out at base station 300.

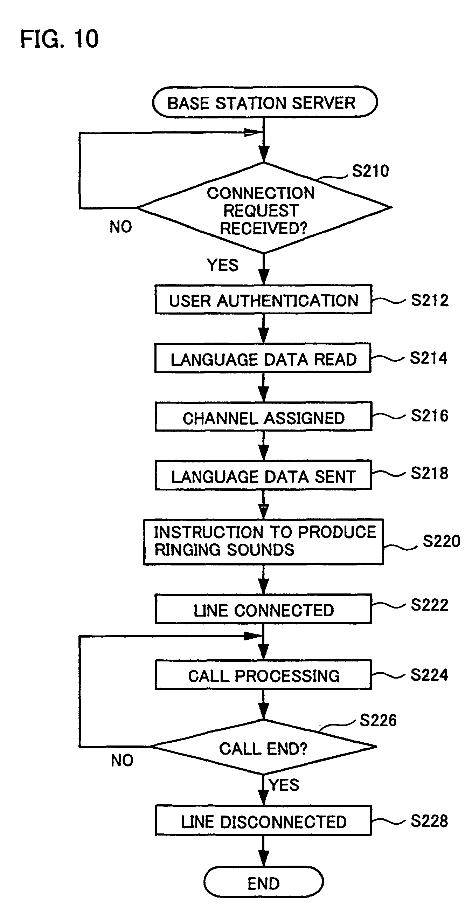

Referring to a flow chart shown in Fig. 10, a call processing in server 200 of the communication system in accordance with the present embodiment will be described.

At S210, control unit 220 determines whether it receives a request for connection from mobile phone 100 to fixed phone 500 via mobile phone network 250 and base station 300. At this point, the telephone number of fixed phone 500 of a connecting destination and the telephone number of mobile phone 100 of an originator are received via mobile phone network 250 and base station 300. If the request for connection is received from mobile phone 100 (YES at S210) then the process will go on to S212. On the other hand, if the request for connection is not be received from mobile phone 100 (NO at S210) then the process will return to S210, waiting for the request for connection to be received.

At S212, CPU 220 performs user authentication. The user authentication is performed based on the received telephone number of mobile phone 100 and the database stored in fixed disk 224 shown in Fig. 8. This process enables mobile phone 100 which has sent the request for connection to be uniquely specified. At S214, CPU 220 reads the language data stored corresponding to mobile phone 100 as specified at S212. At S216, CPU 220 assigns a communication channel between mobile phone 100 and fixed phone 500. At this point, server 200 sends the telephone number of fixed phone 500 of the connecting destination that has been received at S210, to control station server 900 of network control station 800. Control station server 900 assigns a speech channel to fixed phone 500 via switching station 400. As a result, the communication channel between server 200 and fixed phone 500 is assigned.

At S218, CPU 220 sends the language data to fixed phone 500 via switching station 400 and control station server 900 using the assigned communication channel. At S220, CPU 220 sends a command to produce a ringing sound for fixed phone 500 via switching station 400 and control station server 900. At S222, CPU 220, in reply to the response from fixed phone 500, opens the communication channel between server 200 and fixed phone 500 via switching station 400 and control station server 900 to allow communication. At this point, server 200 can be in communication with fixed phone 500 via switching station 400 and control station server 900. Furthermore, server 200 can be in communication with the mobile phone via mobile phone network 250 and base station 300. As a result, mobile phone 100 and fixed phone 500 can be in communication with each other.

At S224, CPU 220 performs a communication processing between mobile phone 100 and fixed phone 500. In this communication processing, CPU 220 receives voice information corresponding to the language data sent from fixed phone, via switching station 400 and control station server 900, and sends that voice information to mobile phone 100 via mobile phone network 250 and base station 300.

At S226, CPU 220 determines whether the call is ended. This determination is made depending on whether a call end command is received either from mobile phone 100 or fixed phone 500. If the call is ended (YES at S226) then the process will go on to S228. On the other hand, if the call is not ended (NO at S226) then the process will return to S224.

At S228, CPU 220 disconnects the communication line between server 200 and fixed phone 500.

It is noted that the process concerning the communication connection such as the connection process at S210, the connection end process at S226, or the like, as described above may be carried out at base station 300 rather than at server 200.

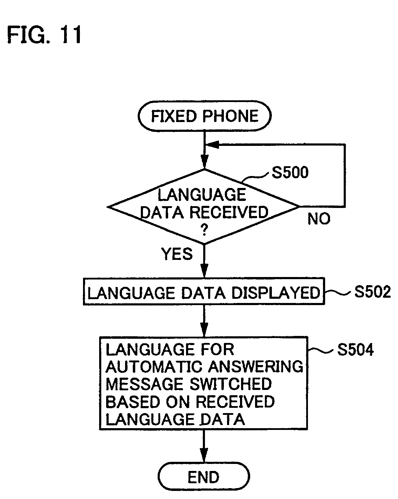

Referring to a flow chart shown in Fig. 11, the call processing in fixed phone 500 of the communication system in accordance with the present embodiment will be described.

At S500, fixed phone 500 determines whether it receives the language data from server 200 via switching station 400 and control station server 900. This process is as a response to S218. If the language data is received from server 200 (YES at S500) then the process will go on to S502. On the other hand, if the language data is riot received from server 200 (NO at S500) then the process will return to S500, waiting for the language data to be received from server 200.

At S502, fixed phone 500 displays a language name represented by the language data on its display unit. At S504, fixed phone 500 switches the language for an automatic answering message based on the received language data.

An operation of the communication system based on the forgoing structure and flow chart will be described.

### [Language Data Registering Operation]

When mobile phone 100 is powered (YES at S100) and mobile phone 100 receives the broadcast information from base station 300 (YES at S102), USIM card reading unit 126 of mobile phone 100 reads the data in the USIM card (S104). If mobile phone 100 acquires the information about language (LI) (YES at S106) then it sends the language information to base station 300 (S108).

As the language information is sent from mobile phone 100 to base station 300, base station 300 receives the language information (YES at S302). Base station 300 sends the received language information to server 200 via mobile phone network 250 (S304).

As the language information is sent from base station 300 to server 200 via mobile phone network 250, the server 200 receives the language information (YES at S200). Server 200 stores the language data and the like into the database in fixed disk 224 based on the received language information (S202).

When the power of mobile phone 100 is turned off and again turned on after the USIM card being exchanged, the information about language (LI) recorded in the exchanged USIM card is overwritten on the language data of the prescribed user in fixed disk 224 of server 200.

### [Call Operation]

If server 200 receives the request for connection from mobile phone 100 to fixed phone 500 via mobile phone network 250 and base station 300 (YES at S210) then user authentication is performed based on the telephone number of mobile phone 100 of an originator included in the connection request (S212). The corresponding language data of the user is read from the database in fixed disk 224 (S214), and a communication channel between mobile phone 100 and fixed phone 500 via switching station 400 and control station server 900 is assigned (S216). Using the assigned communication channel, the read language data is sent to fixed phone 500 via switching station 400 and control station server 900. Thereafter, an instruction to produce a ringing sound is sent from server 200 to fixed phone 500 (S220), fixed phone 500 responds, and then the communication between mobile phone 100 and fixed phone 500 is allowed (S222).

At the fixed phone which has received the language data from server 200 via switching station 400 and control station server 900 (YES at S500), the language represented by the language data is displayed on the display unit of fixed phone 500 (S502) before a ringing sound is made. Based on the received language data, the language of the automatic answering message is switched (S504). It is noted at fixed phone 500, the user of fixed phone 500 who looks at the language displayed on the display unit may lift the handset and speak in the language displayed on the display unit.

As describe above, in accordance with the present invention, the user of the mobile phone can talk to the user of the fixed phone using the language of the language information recorded in the recording medium removable from the mobile phone without setting the language information in the mobile phone.

### Second Embodiment

A second embodiment of the present invention will be described. In the following, the same structure and flow chart as in the first embodiment above will be denoted with the same reference sign and therefore detailed description thereof will not be repeated.

The present embodiment is different from the first embodiment above in the procedure of the call processing in server 200. This procedure will be described.

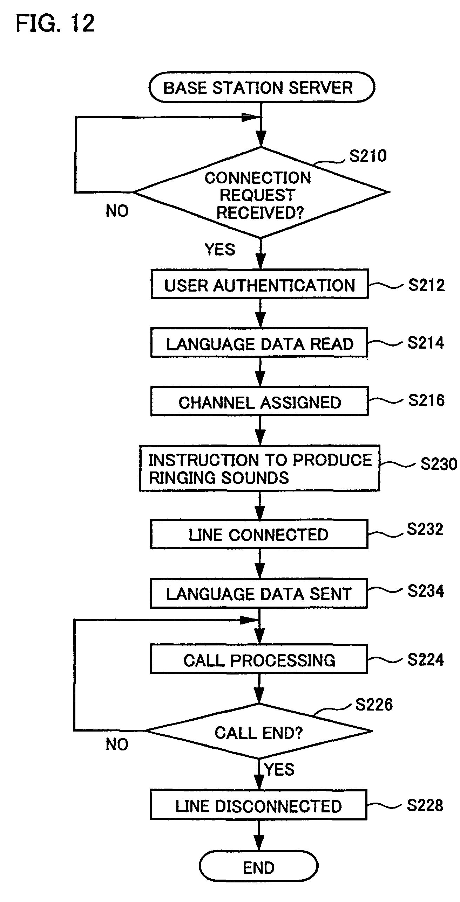

Referring to a flow chart shown in Fig. 12, the call processing in server 200 in accordance with the present embodiment will be described. It is noted that in Fig. 12 illustrated below, the step of carrying out the same process as in Fig. 10 illustrated above is denoted with the same step numeral. Therefore, detailed description thereof will not be repeated.

After the process in S216, at S230, CPU 220 sends a command to produce a ringing sound for fixed phone 500 via switching station 400 and control station server 900.

At S232, CPU 220 opens a communication channel between server 200 and fixed phone 500 to allow communication between server 200 and fixed phone 500. At this point, server 200 can be in communication with fixed phone 500 via switching station 400 and control station server 900. Furthermore, server 200 can also be in communication with mobile phone 100 via mobile phone network 250 and base station 300. As a result, the communication between mobile phone 100 and fixed phone 500 is allowed.

At S234, CPU 220 sends the language data to fixed phone 500 using the assigned communication channel. Thereafter, the process will go on to S224, and CPU performs the communication processing between mobile phone 100 and fixed phone 500. In this communication processing, CPU 220 receives voice information corresponding to the language data, which is sent from fixed phone 500, and sends that voice information to mobile phone 100.

It is noted that the process concerning the communication connection such as the connection process at S210, the connection end process at S226 or the like as described above may be carried out at base station 300 rather than at server 200.

An operation of the communication system based on the foregoing structure and flow chart will be described.

### [Call Operation]

When server 200 receives the request for connection from mobile phone 100 to fixed phone 500 (YES at S210), server 200 performs user authentication (S212), reads the corresponding language data for the user (S214), and assigns a communication channel between mobile phone 100 and fixed phone 500 via switching station 400 and control station server 900 (S216). An instruction to produce a ringing sound is sent from server 200 to fixed phone 500 via switching station 400 and control station server 900 (S230), fixed phone 500 responds, and then the communication between mobile phone 100 and fixed phone 500 is allowed (S232). When the communication is allowed, the read language data is sent to fixed phone 500 via switching station 400 and control station server 900 using the assigned communication channel (S234).

Fixed phone 500 receiving the language data receives the language data sent from server 200 via switching station 400 and control station server 900 when the ringing sound is made and the handset is lifted (YES at S500). The language represented by the language data is displayed on the display unit of fixed phone 500 (S502), and the language for the automatic answering message is switched based on the received language data (S504). It is noted that at fixed phone 500, the user of fixed phone 500 himself/herself may lift the handset, look at the language displayed on the display unit, and speak in the language displayed on the display unit. Alternatively, the user may switch on the automatic answering message after lifting the handset.

As described above, the effect similar to the previous embodiment can be realized also in the present embodiment. Third Embodiment

A third embodiment of the present invention will be described below. In the following, as in the previous second embodiment, the same structure and flow chart as in the first embodiment will be denoted with the same reference sign. Therefore, detailed description will not be repeated here.

The present embodiment is different from the first and second embodiments described above in the procedure of the call processing in server 200. This procedure will be described.

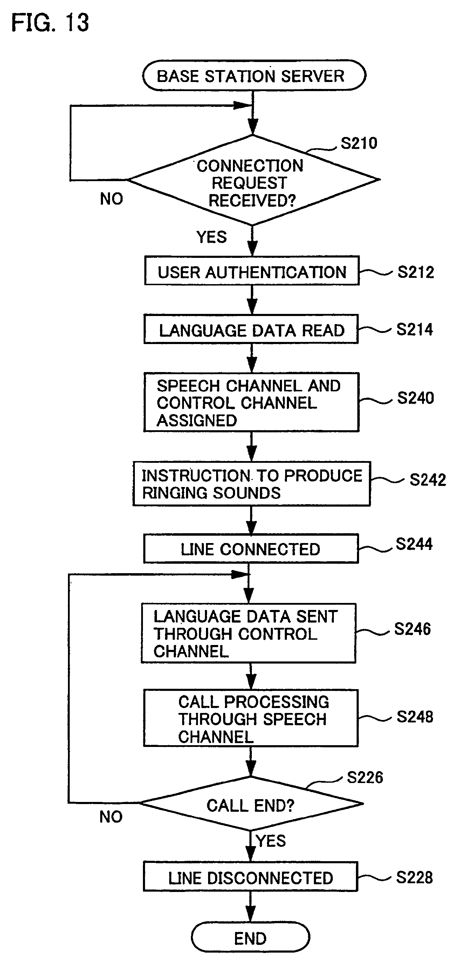

Referring to a flow chart shown in Fig. 13, the call processing in server 200 in accordance with the present embodiment will be described. It is noted that in Fig. 13 described below, the step of carrying out the same process as in Fig. 10 described above will be denoted with the same step numeral. Therefore, detailed description thereof will not be repeated herein.

After the process in S214, at S240, CPU 220 assigns a speech channel and a control channel between mobile phone 100 and fixed phone 500 via switching station 400 and control station server 900 (S240). At this point, server 200 sends the telephone number of fixed phone 500 of the connecting destination received at 210 to control station server 900 of network control station 800. Control station server 900 assigns the speech channel and the control channel to fixed phone 500 via switching station 400. As a result, the speech and control channels between server 200 and fixed phone 500 are assigned.

At S242, CPU 220 sends a command to produce a ringing sound for fixed phone 500 via switching station 400 and control station server 900.

At S244, CPU 220 opens the speech and control channels between server 200 and fixed phone 500 to allow the communication between server 200 and fixed phone 500. At this point, server 200 can be in communication with fixed phone 500 through the speech and control channels via switching station 400 and control station server 900. Furthermore, server 200 can also be in communication with mobile phone 100 through the speech channel via mobile phone network 250 and base station 300. As a result, the communication is allowed between mobile phone 100 and fixed phone 500 through the speech channel.

At S246, CPU 220 uses the assigned control channel to send the language information to fixed phone 500 via switching station 400 and control station server 900. At S248, CPU 220 uses the assigned speech channel to perform a communication processing between mobile phone 100 and fixed phone 500. In this communication processing, CPU 220 receives voice information corresponding to the language data, which is sent from fixed phone 500 via switching station 400 and control station server 900, and sends that voice information to mobile phone 100 via mobile phone network 250 and base station 300.

It is noted that the process concerning the communication connection such as the connection process at S210, the connection end process at S226 or the like as described above may be carried out at base station 300 rather than at server 200.

An operation of the communication system based on the foregoing structure and flow chart will be described.

### [Call Operation]

When server 200 receives a connection request from mobile phone 100 to fixed phone 500 via mobile phone network 250 and base station 300, (YES at S210), server 200 performs user authentication (S212), reads the corresponding language data of the user (S214), and assigns a speech channel and a control channel between mobile phone 100 and fixed phone 500 via switching station 400 and control station server 900 (S240). An instruction to produce a ringing sound is sent from server 200 to fixed phone 500 via switching station 400 and control station server 900 (S242), and when fixed phone 500 responds (S244), the read language data is sent to fixed phone 500 via switching station 400 and control station server 900 using the assigned control channel (S246). A call is maintained between mobile phone 100 and fixed phone 500 using the assigned speech channel (S248).

Fixed phone 500 receiving the language data receives the language data from server 200 through the control channel (YES at S500) when a ringing sound is made and the handset is lifted. A language represented by the language data is displayed on the display unit of fixed phone 500 (S502), and the language for the automatic answering message is switched based on the received language data (S504).

It is noted that at fixed phone 500, the language represented by the language data received through the control channel may be displayed on the display unit before the handset of fixed phone 500 is lifted (before the line of the speech channel opens).

As described above, the effect similar to the previous embodiment can be realized also in this embodiment.

### Fourth Embodiment

A fourth embodiment of the present invention will be described below. In the following, the same structure or flow chart as in the first embodiment above is denoted with the same reference sign. Therefore, detailed description thereof will not be repeated.

The present embodiment is different from the first, second and third embodiments described above in the call processing at server 200. In the present embodiment, server 200 communicates with contents server 600 rather than with fixed phone 500. Contents server 600 can send the contents stored by the contents server 600 to server 200 via control station server 900 of network control station 800 in response to a request received from server 200 via control station server 900 of network control station 800.

Contents server 600 is implemented by the computer shown in Figs. 4 and 5. Contents server 600 has a configuration similar to server 200. Contents server 600 includes a CPU 620 corresponding to CPU 220, memory 622 corresponding to memory 222, a fixed disk 624 corresponding to fixed disk 224, and a communication interface 626 corresponding to communication interface 226. A plurality of contents are stored in fixed disk 624. The contents are stored using a plurality of languages.

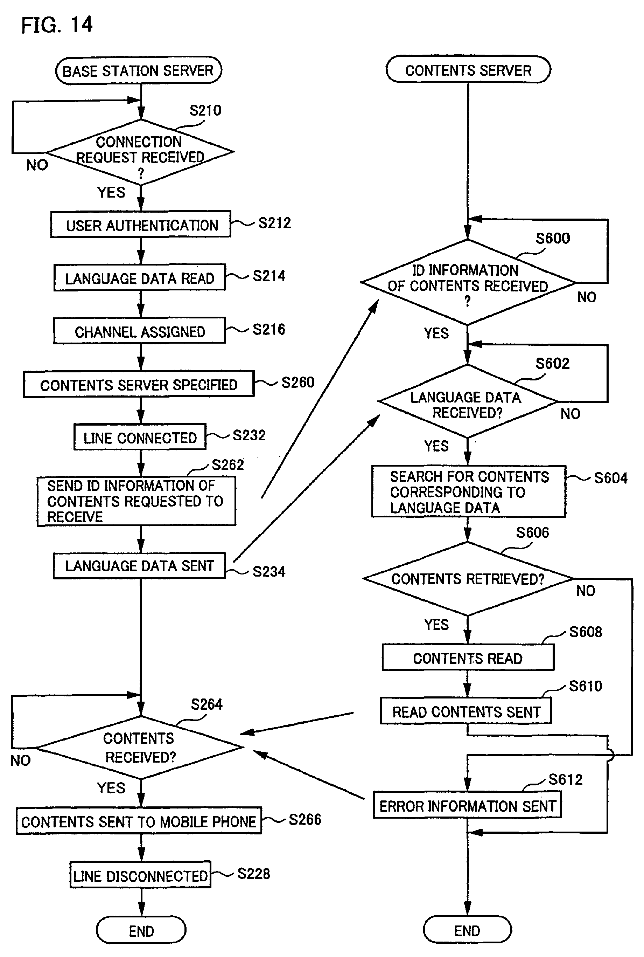

Referring to a flow chart shown in Fig. 14, a call processing at server 200 in accordance with the present embodiment will be described. It is noted that in Fig. 14 described below, the step of carrying out the same process as in Fig. 10 described above is denoted with the same step numeral. Therefore, detailed description thereof will not be repeated herein.

After the process at S216, at S260, CPU 220 specifies contents server 600. This process is carried out based on URL included in the connection request received from mobile phone 100.

At S232, CPU 220 opens a communication channel between server 200 and contents server 600 to allow the communication between server 200 and contents server 600. At this point, server 200 sends information to specify contents server 600 specified at S260, to control station server 900 of network control station 800. Control station server 900 allows the communication with contents server 600 via the Internet 700. As a result, the communication between server 200 and contents server 600 is allowed.

At S262, CPU 220 sends to contents server 600 identification information of contents which server 200 requests to receive. Here, the identification information of the contents requested to receive is included in the connection request received from mobile phone 100. Here, server 200 sends the identification information to specify the contents to control station server 900 of network control station 800. Control station server 900 sends the identification information of the contents to contents server 600 via the Internet 700. As a result, the identification information of the contents is sent from server 200 to contents server 600.

At S234, CPU 220 uses the assigned communication channel to send the language data to contents server 600. At this point, server 200 sends the language data to control station server 900 of network control station 800. Control station server 900 sends the language data to contents server 600 via the Internet 700. As a result, the language data is sent from server 200 to contents server 600.

At S264, CPU 220 determines whether it receives contents from contents server 600. At this point, control station server 900 receives contents from contents server 600 via the Internet 700. Server 200 receives the contents from control station server 900 of network control station 800. As a result, server 200 receives the contents from contents server 600. If contents are received from contents server 600 (YES at S264) then the process will go on to S266. On the other hand, if contents are not received from contents server 600 (NO at S264), reception of contents will be waited.

At S266, CPU 220 sends the contents received from contents server 600 at S264 to mobile phone 100. At S228, CPU 220 disconnects the communication line between server 200 and fixed phone 500.

Referring to the flow chart shown in Fig. 14, a call processing at contents server 600 in accordance with the present embodiment will be described.

At S600, CPU 620 determines whether it receives identification information of the contents which the server 200 requests to receive. At this point, server 200 sends the identification information of the contents to control station server 900 of network control station 800. Contents server 600 receives the identification of the contents sent by control station server 900 via the Internet 700. As a result, contents server 600 receives the identification information of the contents from server 200. If the identification information of the contents is received from server 200 (YES at S600) then the process will go on to S602. On the other hand, if the identification information of the contents is not received from server 200 (NO at S600) then the process will return to S600, waiting for the identification information of the contents to be received.

At S602, CPU 620 determines whether it receives the language data from server 200. At this point, server 200 sends the language data to control station server 900 of network control station 800. Contents server 600 receives the language data sent from control station server 900 via the Internet 700. As a result, contents server 600 receives the language data from server 200. If the language data is received from server 200 (YES at S602) then the process will go on to S604. On the other hand, if the language data is not received from server 200 (NO at S602) then the process will return to S602, waiting for the language data to be received.

At S604, CPU 620 searches the contents stored in fixed disk 624 for the contents which are specified by the identification information of the contents received at S600 and which is described in a language of the language data received at S602.

At S606, CPU 620 determines whether if it retrieves the desired contents from fixed disk 624. If the desired contents are retrieved (YES at S606) then the process will go on to S608. On the other hand, the desired contents are not retrieved (NO at S606) then the process will return to S612.

At S608, CPU 620 reads the desired contents from fixed disk 624. At S610, CPU 620 sends the read contents to server 200. Thereafter, the process will end.

It is noted that server 200 which receives error information sends the received error information to mobile phone 100.

It is noted that the process concerning the communication connection such as the connection process at S210, the connection end process at S228 or the like as described above may be carried out at base station 300 rather than at server 200.

An operation of the communication system based on the forgoing structure and flow chart will be described.

### [Contents Communicating Operation]

The user of mobile phone 100 enters information to specify contents server 600 and identification information to specify contents using operation unit 132 of mobile phone 100. As mobile phone 100 sends the input connection request to server 200 via mobile phone network 250 and base station 300, server 200 receives connection information (YES at S210). Server 200 performs user authentication (S212), reads the corresponding language data of the user (S214), and assigns a speech channel between mobile phone 100 and contents server 600 (S216).

Server 200 specifies contents server 600 (S260), and the communication between server 200 and contents server 600 is allowed via the Internet 700 and control station server 900 (S232). The identification information of the contents requested to receive (S262) and the language data (S234) are sent from server 200 to contents server 600 via the Internet 700 and control station server 900.

In response to the identification information of the contents being sent from server 200, contents server 600 receives the identification information of the contents via the Internet 700 and control station server 900 (YES at S600). In response to the language data being sent from server 200, contents server 600 receives the language data via the Internet 700 and control station server 900 (YES at S602). The desired contents stored in a language specified by the language data are searched for (S604), and when the desired contents are retrieved (YES at S606), the contents are read from fixed disk 624 (S608), and the read contents are sent to server 200 via the Internet 700 and control station server 900 (S610).

The contents described in the language specified by the language data from contents server 600 are sent to mobile phone 100 for display on the display unit 134 of mobile phone 100.

It is noted that contents may be sent from contents server 600 to mobile phone 100 in the following manner. In the process at S262, server 200 sends the E-mail address of mobile phone 100 that requests to receive the contents, along with the contents identification information, to contents server 600 via the Internet 700 and control station server 900. At S604, when contents server 600 receives the language data from server 200, it disconnects the communication line temporarily. Contents server 600 reads the desired contents and sends the read contents to the received E-mail address. In this manner also, the contents described in the language desired by the user of mobile phone 100 are sent to mobile phone 100.

As described above, in accordance with the present invention, the user of the mobile phone can receive and display at the mobile phone the contents in a language of the language information recorded in the recording medium removable from the mobile phone, without setting the language information in the mobile phone.

It should be understood that the embodiments disclosed herein are by way of illustration and not to be taken by way of limitation. The scope of the present invention is limited not by the forgoing description but only by the claims, and all changes within the claims and equivalents thereof are intended to be embraced.

### Industrial Applicability

As described above, in accordance with the present communication system, a terminal sends language information recorded in a removable recording medium to a server, and the server stores the sent language information for each terminal. As the server receives a connecting destination from the terminal, it can send the language information to that connecting destination and receive the information that responds to the sent language information. Therefore, the communication system of the present invention is suitable for a communication system in which information is communicated with a number of languages switched.

## Claims

1. A server for use in a communication system including a plurality of terminals and a server communicating with said terminals,
each of said terminals including means for reading language information representative of a language used by the user of said terminal from a recording medium removable from said terminal, means for sending to said server said language information and a connecting destination input by the user of said terminal, and means for outputting information received from said server,
said server comprising:
communication means for communicating with said terminal;
storage means for storing information; and
control means connected to said communication means and said storage means for controlling said communication means and said storage means,
said control means including
means, responsive to reception of said language information from said terminal through said communication means, for controlling said storage means such that said received language information is stored,
means, responsive to reception of said connecting destination from said terminal through said communication means, for controlling said communication means such that the language information stored in said storage means is sent to a terminal of said connecting destination, and
means, responsive to reception of information sent from the terminal of said connecting destination in response to said language information through said communication means, for controlling said communication means such that the information received from said connecting destination is sent to said terminal.

2. The server according to claim 1, wherein
the information sent in response to said language information is voice information represented in a language corresponding to said language information.

3. The server according to claim 1, wherein
the information sent in response to said language information is character information represented in a language corresponding to the language information.

4. The server according to claim 1, wherein
said means for controlling such that the language information is sent to a terminal of said connecting destination includes means for controlling said communication means such that said connecting destination receives said language information before a communication line between said server and the terminal of said connecting destination opens.

5. The server according to claim 1, wherein
said means for controlling such that the language information is sent to a terminal of said connecting destination includes means for controlling said communication means such that said connecting destination receives said language information after a communication line between said server and the terminal of said connecting destination opens.

6. The server according to claim 1, wherein
said control means further includes means for connecting said server with said connecting destination through a communication channel and a control channel, and
said means for controlling such that the language information is sent to a terminal of said connecting destination includes means for controlling said communication means such that said connecting destination receives said language information through said control channel.

7. A terminal for use in a communication system including a terminal and a server communicating with said terminal, said server including means connected to a terminal of a connecting destination designated by said terminal for storing language information received from said terminal, means, responsive to reception of said connecting destination from said terminal, for sending said language information to said connecting destination, means for receiving information sent in response to said language information, and means for sending the information received from the terminal of said connecting destination to said terminal,
said terminal comprising:
communication means for communicating with said server;
reading means for reading information from a recording medium removable from said terminal;
input means for allowing the user of said terminal to input said connecting destination;
output means for outputting information received from said server; and
control means connected to said communication means, said reading means, said input means and said output means for controlling said terminal, the language information representative of a language used by the user of said terminal being stored in said recording medium,
said control means including
means for controlling said communication means such that said language information read by said reading means is sent to said server based on a predetermined condition,
means, responsive to input of said connecting destination using said input means, for controlling said communication means such that said connecting destination is sent to said server, and
means for controlling said output means such that information received from said server through said communication means is output.

8. The terminal according to claim 7, wherein
said terminal is a mobile terminal.

9. The terminal according to claim 7, wherein
said predetermined condition is such a condition that said reading means detects that said recording medium is attached.

10. The terminal according to claim 7, wherein
said recording medium is a recording medium in which said language information is stored in a predetermined data format.

11. A communication method in a server for use in a communication system including a plurality of terminals and a server communicating with said terminals, wherein
each of said terminals reads language information representative of a language used by the user of said terminal from a recording medium removable from said terminal, sends to said server said language information and a connecting destination input by the user of said terminal, and outputs information received from said server,
said communication method comprising the steps of:
in response to said language information being received from said terminal, storing said received language information;
in response to said connecting destination being received from said terminal through communication means, sending the language information stored at said step of storing said language information, to a terminal of said connecting destination; and
in response to information sent in response to said language information being received from the terminal of said connecting destination, sending the information received from said connecting destination to said terminal.

12. The communication method according to claim 11, wherein
said information sent in response to said language information is voice information represented in a language corresponding to said language information.

13. The communication method according to claim 11, wherein
said information sent in response to said language information is character information represented in a language corresponding to said language information.

14. The communication method according to claim 11, wherein
the step of sending the language information to a terminal of said connecting destination includes the step of sending said language information such that said connecting destination receives said language information before a communication line between said server and the terminal of said connecting destination opens.

15. The communication method according to claim 11, wherein
said step of sending the language information to a terminal of said connecting destination includes the step of sending said language information such that said connecting destination receives said language information after a communication line between said server and the terminal of said connecting destination opens.

16. The communication method according to claim 11, wherein
said server is connected with said connecting destination through a communication channel and a control channel, and
said step of sending the language information to a terminal of said connecting destination includes the step of sending said language information such that said connecting destination receives said language information through said control channel.
